# EUROPEAN PATENT SPECIFICATION

(11) **EP 1 386 820 B1**
(45) Date of publication and mention of the grant of the patent: **12.09.2007**
(21) Application number: 03017269.6
(22) Date of filing: 30.07.2003
(51) Int. Cl.: B62D 1/18, B62D 1/181

(54) **Tilt adjustable steering column assembly**
Neigungsverstellbare Lenksäulen-Baugruppe
Ensemble de colonne de direction à inclinaison réglable

(30) Priority: 31.07.2002 JP 2002222764
(43) Date of publication of application: 04.02.2004
(73) Proprietor: FUJI KIKO Co., Ltd., Kosai-shi, Shizuoka 431-0431 (JP)
(72) Inventor: Arihara, koji, Kosai-shi, Shizuoka 431-0431 (JP)
(74) Representative: Grünecker, Kinkeldey, Stockmair & Schwanhäusser Anwaltssozietät

(56) References cited:
- DE-A- 3 634 977
- FR-A- 2 726 527
- US-A- 5 275 066
- PATENT ABSTRACTS OF JAPAN vol. 1997, no. 02, 28 February 1997 (1997-02-28) & JP 08 276852 A (NIPPON SEIKO KK), 22 October 1996 (1996-10-22)

## Description

The present invention relates to a tilt adjustable steering column assembly for an automotive vehicle according to the preamble of claim 1.
Such a tilt adjustable steering assembly for an automotive vehicle is already known from US 5,275,066 A; this document is forming the preamble of claim 1. Said document describes an elongated jacket tubular member having a tilt rotation axle at one end thereof. Moreover, said document discloses a fixed bracket, a bell crank lever and an actuator.
JP 08 276852 discloses a tilt steering device comprising a steering column, a tilt lowering bracket, a fixed bracket, vertically elongated hole and a tilt lever.
DE 36 34 977 A discloses a powered tilt steering arrangement for a vehicle, using a motor which rotates unidirectionally. The powered tilt system arrangement comprises a steering column, a tilt bearing, a motor and an actuator, which actuates the tilt bearing. Moreover, said arrangement comprises a lock mechanism for locking the steering assembly when the actuator is stopped.

A steering wheel of an automotive vehicle is tilted to move a jacket tube using a link mechanism so that the steering wheel is moved in front of a driver's seat in a vertical direction. Thus, the steering wheel can be set to the optimum position. For example, a Japanese Patent Application First Publication No. Showa 49-116742 published on November 7, 1974 exemplifies a first previously proposed steering wheel height position adjustment steering column assembly (previously proposed tilt adjustable steering column assembly). In the first previously proposed tilt adjustable steering column assembly, a bell crank (or a bell crank lever) is used to tilt a jacket tube so that the steering wheel is tilted in the vertical direction. The bell crank is attached onto a link member in such a way that one end of the link member is rotatable about a rotational center of the bell crank. The other end of the link member is rotatably attached onto one end of a bracket attached onto one end of a bracket fixed onto a vehicle body. In other words, the rotational center of the bell crank is enabled to swing with respect to the bracket. One arm of the bell crank rotatably supports the jacket tube. The other arm of the bell crank is linked to the jacket tube via a liquid pressure cylinder. The liquid pressure cylinder generally includes a cylinder casing and a cylinder rod. The cylinder casing is rotatably supported on the other arm of the bell crank and the cylinder rod is rotatably supported on the jacket tube. Another bracket fixed to the vehicle body serves to rotatably support the other end of the jacket tube. When the liquid cylinder is in a lock state, a cylinder head is held and fixed to the cylinder casing. A length of the liquid pressure cylinder is held constant. When the liquid pressure cylinder is in an unlock state (lock release state), the cylinder rod is relatively movable with respect to a cylinder casing. In other words, in the first previously proposed steering column assembly, after the steering wheel is moved vertically up to a position fit to a driver's posture with the liquid pressure cylinder set in the lock release state, the liquid pressure chamber is in the lock state so that a height of the steering wheel is adjusted.

In addition, a Japanese Patent Application Publication (Tokuhyo) Heisei 7-506308 published on July 13, 1995 (PCT/GB92/01906) which corresponds to a United States Patent No. 5,275,066 issued on January 4, 1994 exemplifies a second previously proposed steering column assembly for the automotive vehicle. In the second previously proposed tilt adjustable steering column assembly, a bell crank lever has a rotation center rotatable about a bracket fixed to the vehicle body. That is to say, the bell crank is rotatable about rotational center fixed to a predetermined position. An end of the bell crank lever rotatably supports the jacket tube. The other arm of the bell crank lever has its end linked to the jacket tube via an electric motor. The electric motor is generally constituted by a main body portion and a rod portion. The main body portion is rotatably supported on the jacket tube. The rod is rotatably supported on the end of the other arm of the bell crank. When the electric motor is driven, a projection distance of the road portion from the main body portion is varied. According to a varied distance of the rod portion, the bell crank lever is rotated so that the jacket tube is tiltably moved. Unless electric motor is operated, the projection distance of the rod portion from the main body portion is held constant. The bell crank is not rotated and the jacket tube is fixed. In addition, in the second previously proposed steering column assembly, a tilt rotation center (viz., a pivot axis) swings in forward and rearward directions (longitudinal direction of the vehicle body) when the jacket tube is tilted about the tilt rotation center. In the previously proposed steering column assembly, the electric motor causes the length of electric motor to be variable so that the bell crank is rotated. Thus, while the jacket tube is tilted in the longitudinal direction of the vehicle body, the jacket tube is tilted so that a height of the steering wheel is adjusted.

However, in the first previously proposed tilt adjustable steering column assembly, a strength and a rigidity are needed to be ensured in order to attach an air bag onto the steering column. To achieve this, it is necessary to enlarge and make the bell crank lever and the link member heavier. Thus, a manufacturing cost of the steering column assembly is accordingly increased. In the second previously proposed tilt steering column assembly, when the jacket tube is tilted, the tilt rotation center swings in the longitudinal direction of the vehicle body. Thus, there is a possibility that the steering wheel is excessively advanced or retracted with respect to the vehicle driver. In order to reduce a distance related to the advance or retraction of the steering wheel, a length of the one arm of the bell crank may be shortened and a distance between the rotation center and the position of the one arm on which the jacket tube is supported may be shortened. However, on the contrary, a tiltable distance of the steering wheel which naturally is needed to have becomes shortened.

It is, hence, an object of the present invention to provide an improved tilt adjustable steering column assembly for an automotive vehicle which is less expensive and which can shorten the advance or retraction (expansion or contraction) distance of the steering wheel with respect to a vehicular driver while maintaining a degree of adjustment of the steering wheel in a vertical direction with respect to the driver.

The above and other objects of the invention are achieved by a tilt adjustable steering column assembly for an automotive vehicle according to claim 1. Preferred embodiments are claimed in the dependent claims.

This summary of the invention does not necessarily describe all necessary features so that the invention may also be a sub-combination of these described features.

Fig. 1 is an explanatory view for explaining a tilt neutral position of a tilt adjustable steering column assembly for an automotive vehicle in a preferred embodiment according to the present invention.

Fig. 2 is an explanatory view for explaining a tilt uppermost position of the tilt adjustable steering column assembly for the automotive vehicle in the preferred embodiment according to the present invention.

Fig. 3 is an explanatory view for explaining a tilt lowermost position of the tilt adjustable steering column assembly for the automotive vehicle in the preferred embodiment according to the present invention.

Figs. 4A and 4B are explanatory views for explaining a relationship between a bell crank lever and a vehicular body rearward bracket (fixed bracket) in the preferred embodiment of the tilt adjustable steering column assembly according to the present invention.

Fig. 5 is an explanatory view for explaining an eccentric distance on an eccentric bush used in the tilt adjustable steering assembly of the preferred embodiment.

Fig. 6 is an explanatory view for explaining a concept of a tilt of the tilt adjustable steering column assembly in the preferred embodiment according to the present invention.

Fig. 7 is an explanatory view for explaining the concept of the tilt of the tilt adjustable steering column assembly.

Reference will hereinafter be made to the drawings in order to facilitate a better understanding of the present invention.

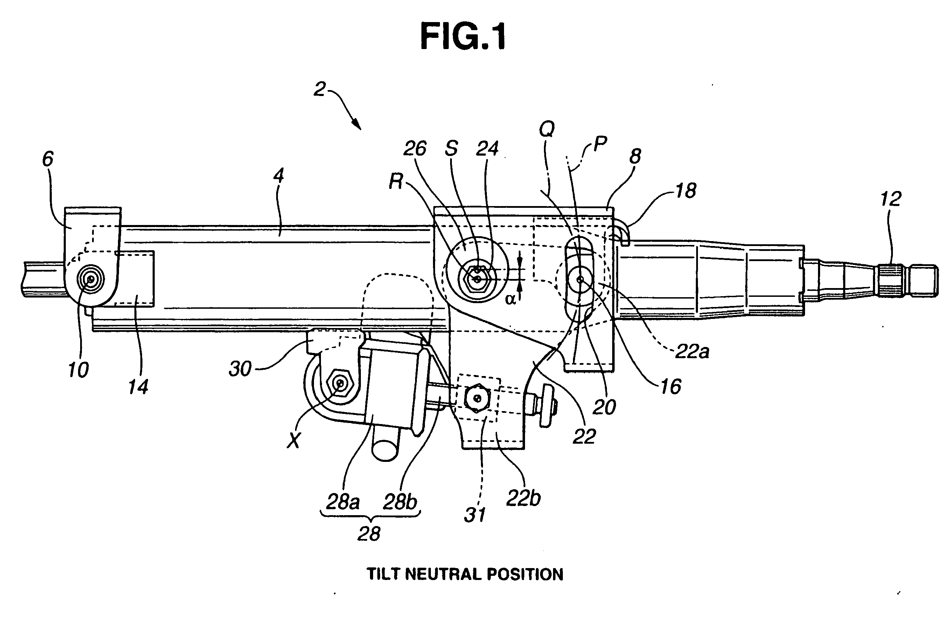

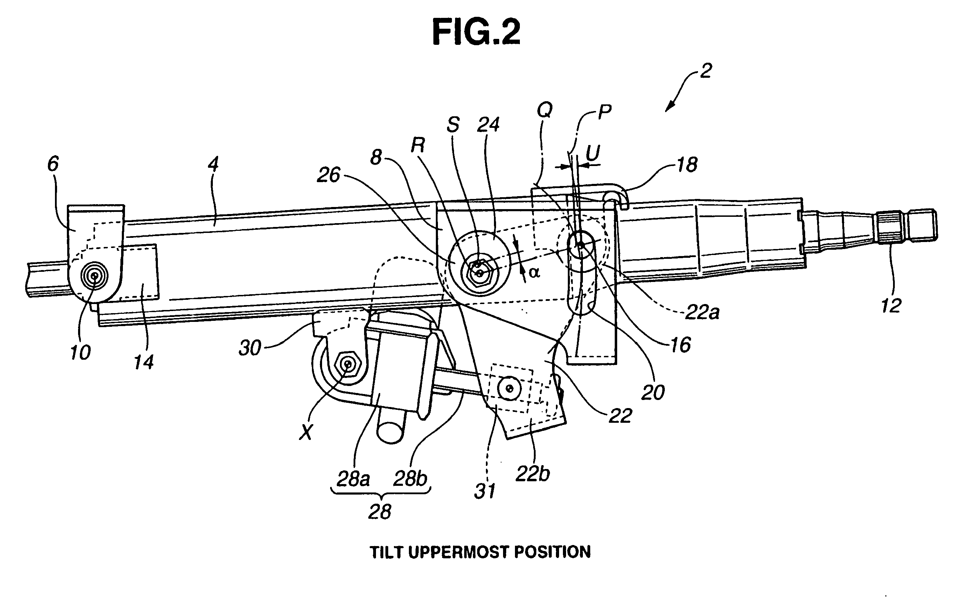

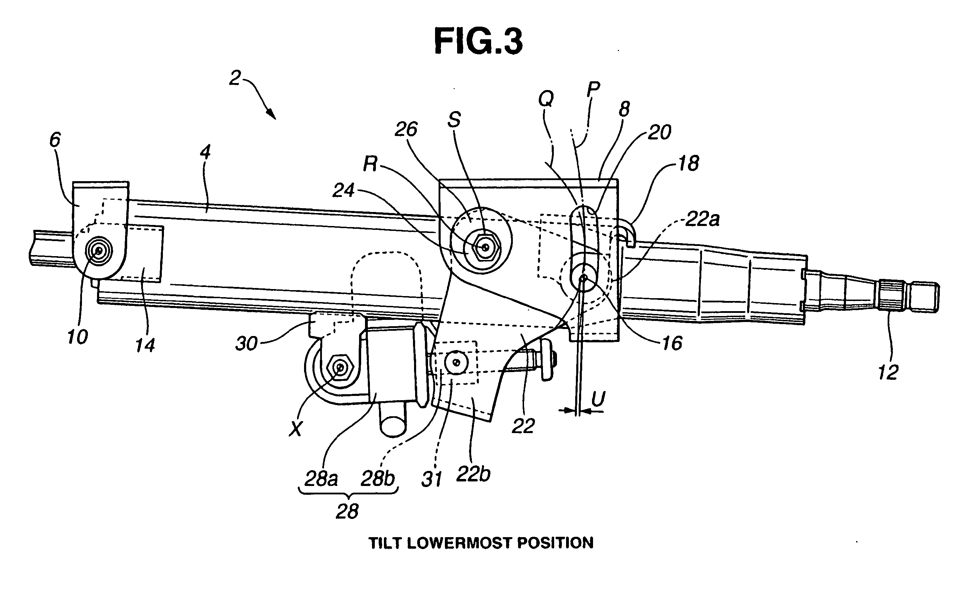

Figs. 1 through 3 show a preferred embodiment of a tilt adjustable steering column assembly according to the present invention. Fig. 1 shows a state in which a jacket tube (also referred to as a jacket tubular member) denoted by 4 is under a tilt neutral state. Fig. 2 shows a state in which jacket tube 4 is under an uppermost tilt state. Fig. 3 shows a state in which jacket tube 4 is under a lowest tilt state. In tilt adjustable steering column assembly 2, jacket tube 4 is supported on a vehicle body at two points in a longitudinal direction of the vehicle by means of a vehicular body forward bracket 6 and a vehicular body rearward bracket 8 which is a fixed bracket. A tilt rotation center axle 10 of jacket tube 4 rotatably supported on vehicular body forward bracket 6 serves as a tile rotation center to tiltably move jacket tube 4. It is noted that a reference numeral 12 denotes a steering wheel attaching portion to attach a steering wheel 1. Tilt rotation center axis 10 is formed on a first auxiliary bracket 14 fixed onto one end of jacket tube 4. Tilt rotation center axis 10 is positioned on an axial center of jacket tube 4 and always retained at a constant position.

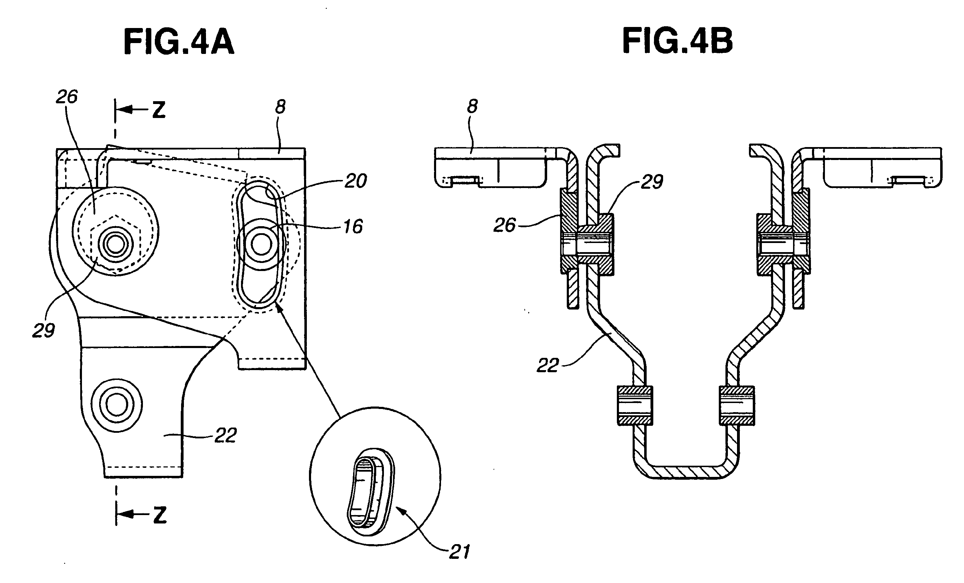

A tilt input axle 16 is disposed on jacket tube 4 at a position thereof nearer to a driver's seat (not shown) than tilt rotation axle 10. Tilt input axle 16 is formed on a second auxiliary bracket 18 fixed to a jacket tube 4 and positioned on the axial center of jacket tube 4. As appreciated from Figs. 1 through 3, tilt input axle 16 is rotatably engaged with an inner wall of a substantially ellipse shaped elongated hole 20 and is slidably engaged therewith along an elongated axis direction. It is noted that a reference numeral 21 shown in Fig. 4A is a guide member made of a resin and mounted about an inner wall of the elongated hole 20. A slidability of tilt input axle 16 with respect to elongated hole 20 is made favorable and a generation of a metallic sound due to a direct contact of tilt input axle 16 with the inner wall of elongated hole 20. Elongated hole 20 is formed so that a curvature of a center line of the elongated axis direction is made coincident with a rotation trajectory (locus or orbit) of tilt input axle 16 about the tilt rotation center. Tilt input axle 16 is rotatably supported on one arm 22a of bell crank 22. Furthermore, vehicular body rearward bracket 8 is formed with a hole into which an eccentric bush 26, as will be described later in details, is inserted. A collar 29 is disposed on bell crank lever 22 as shown in Figs. 4A and 4B. A bolt (not shown) rotatably and axially supports eccentric bush 26 and collar 29 by means of a bolt (not shown). In details, rotation center axle 24 of bell crank lever 22 is supported on a vehicular body rearward bracket 8 via a bolt to be enabled to rotate (pivot) and to swing with respect to bracket 8.

Another arm 22b of bell crank lever 22 rotatably supports nut 31 by means of a rotation of rod portion 28b of electrically drive actuator 28 which serves as a bell crank lever driving (section) means.

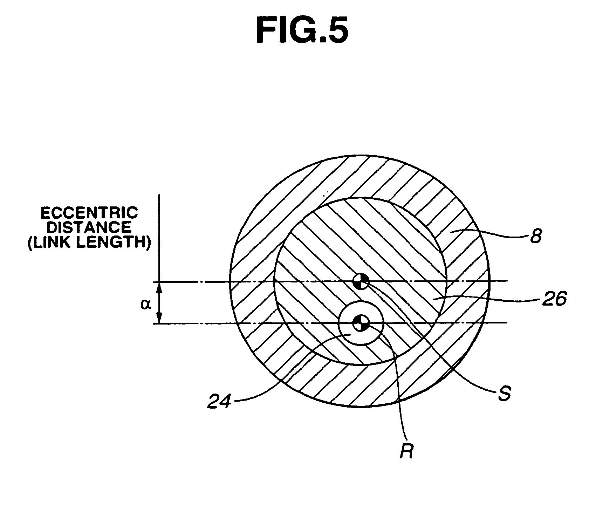

Fig. 5 shows eccentric bush 26 described above. A center R of rotational center axle 24 of bell crank lever 22 is rotatably connected at a position remote from rotation center S of eccentric bush 26 by a predetermined eccentric distance α. Hence, rotational center axis 24 of bell crank lever 22 is swingably and rotatably supported on vehicular body rearward bracket 8. Electrically drive actuator 28 includes: a main body portion 28a rotatably attached onto jacket tube 4 and a rod portion 28b projected from main body portion 28a. A revolution of the motor incorporated into main body portion 28a of actuator 28 causes a projection distance of nut 31 of rod portion 28b from main body portion 28a to be variable. In tilt adjustable steering column assembly 2, the projection quantity (distance) of rod portion 28b is variable as described above. Hence, the other arm 22b of bell crank lever 22 is moved along a plane perpendicular to a vehicle body width direction (lateral direction) of the vehicle so that bell crank lever 22 is rotated. That is to say, if the projection distance **of nut 31** of rod portion 28b is increased, bell crank lever 22 is revolved in a counterclockwise direction as viewed from the drawings. As shown in Fig. 2, tilt input axle 16 supported on one arm 22a of bell crank lever 22 is moved toward an upper direction within elongated hole 20. Thus, jacket tube 4 is revolved in the counterclockwise direction. Consequently, the position of steering wheel 1 is raised. On the other hand, if a projection quantity (distance) **of nut 31** of rod portion 28b is decreased, bell crank lever 22 is revolved in a clockwise direction as viewed from the drawings. As shown in Fig. 3, tilt input axle 16 supported by means of the one arm 22a of bell crank lever 22 is moved in a downward direction within elongated tube 20 so that jacket tube 4 is rotated in the clockwise direction. Thus, the position of steering wheel 1 is lowered toward a lowest position.

It is noted that, since main body portion 28a and rod portion 28b of electrically drive actuator 28 can be deemed to be an integrated rigid body, in tilt steering column assembly 2, jacket tube 4 is tilted only when the projection distance **of nut 31** of rod portion 28b of actuator 28 is varied.

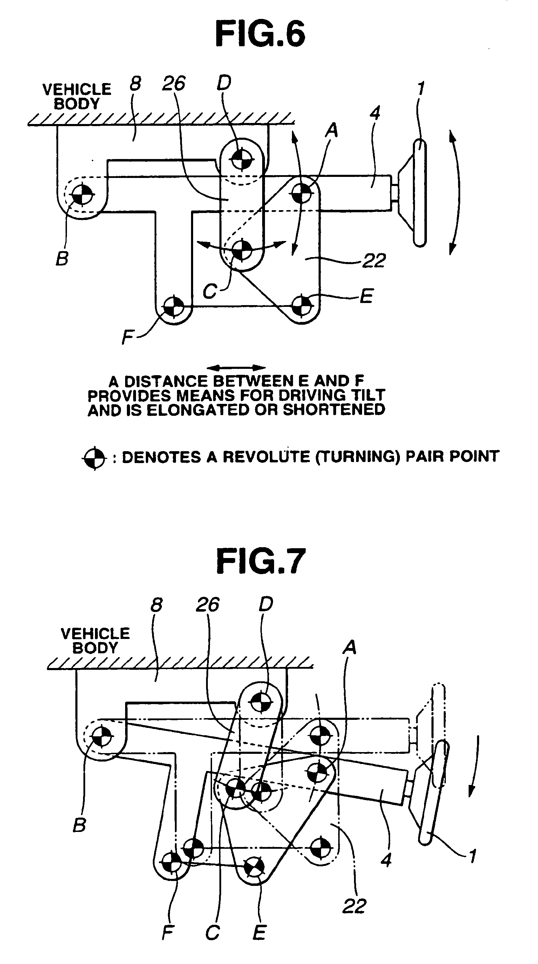

Figs. 6 and 7 show explanatory views for explaining operations of steering column assembly 2 in the embodiment shown in Figs. 1 through 4. In Figs. 6 and 7, a point denoted by A is a revolute (or turning) pair point between tilt input axle 16 and the one arm 22a of bell crank lever 22, a point denoted by B is another revolute pair point between tilt rotation center axle 10 and vehicular body forward bracket 6, a point denoted by C is another turning pair point between eccentric bush 26 and bell crank lever 22, a point denoted by D is another turning pair point between a rotation center S of eccentric bush 26 and vehicular body rearward bracket 8, a point denoted by E is another turning pair point between the other arm 22b of bell crank lever 22 and rod portion 28b of actuator 28, and a point denoted by F is another turning pair point between main body portion 28a of actuator 28 and jacket tube 4. The above-described eccentric distance α corresponds to a length between points of D and C in Figs. 6 and 7. Actuator 28 causes the distance between turning pair points of E and F to be varied so that the position of steering wheel 1 with respect to the driver's posture as shown in Figs. 6 and 7 can be adjusted.

If rotation center axle 24 is rotatably supported on vehicular body rearward bracket 8 without use of eccentric bush 26, bell crank lever 22 when rotated is tried to revolve tilt input axle 24 on vehicular rearward bracket 8 along an orbit Q (refer to Figs. 1 through 3) with an axial distance between rotation center axle 24 and tilt input axle 16 as a radius of curvature. However, using eccentric bush 26 along with the rotation of bell crank lever 22, rotation center axle 24 of bell crank lever 22 swings (pivots) with respect to vehicular rearward bracket 8. Hence, it becomes possible to make the rotation orbit of the position at which tilt input axle 16 of bell crank lever 22 is supported coincident with the rotation orbit of the position at which tilt input axle 16 of jacket tube 4 is disposed. In other words, using eccentric bush 26, an error distance U (quantity) (refer to Figs. 2 and 3) between a center line P of the elongated hole 20 and a orbit Q described above can be eliminated (compensated for by the eccentric distance α).

In tilt adjustable steering column assembly 2, that is to say, rotation center axle 24 of bell crank lever 22 is supported on vehicular body rearward bracket 8 (fixed bracket) via eccentric bush 26. Thus, without development of a twist when bell crank lever 22 is revolved, a tilt motion of jacket tube 4 can smoothly be carried out. In addition, tilt rotation axle 10 is always held at a constant position. Tilt rotation center axle 10 in vehicular body lateral direction does not swing. Therefore, jacket tube 4 is not moved in the vehicular body longitudinal direction and the advance distance or retraction distance of steering wheel 1 with respect to the driver can be minimized.

Since eccentric bush 26 is used, the number of parts of tilt adjustable steering column assembly 2 can be reduced. The whole length of tilt adjustable steering column assembly 2 can be minimized. A design degree of freedom of tilt adjustable steering column assembly 2 becomes high and a high rigidity and a high strength tilt adjustable steering column assembly 2 can be manufactured. In addition, since the design freedom becomes high, the optimum positions of the steering wheel with respect to various body structure driver can be set. Since all of the mechanisms required for a basic operation of the above-described tiltable steering column assembly are constituted by the revolute pairs, conventionally available bearings are used and it is easy to secure a rigidity due to very small looseness.

It is noted that an axial weight (load) of jacket tube 4 can be supported by means of vehicular body rearward bracket 8. That is to say, vehicular body forward bracket 6 and vehicular body rearward bracket 8 can support jacket tube 4 with the axial weight of jacket tube 4 shared thereby. Hence, in general, the rigidity of tilt adjustable steering column assembly 2 can be improved. It is noted that, since tilt input axle 16 is engaged with elongated hole 20, jacket tube 4 can be supported by means of vehicular body forward bracket 8 with a vehicular body vertical weight shared by two separate brackets 6 and 8. Since vehicular body rearward bracket 8 is a structure such that a collision energy generated during a collision of the vehicle body with an object is absorbed, the provision of elongated hole causes the collision energy to smoothly be transmitted to vehicular body rearward bracket 8.

Consequently, a vehicular occupant protection performance of the steering column can be improved. Furthermore, since, in tilt adjustable steering column assembly 2 of the embodiment described above, vehicular rearward bracket 8 is not rotated when mounted in the vehicle body so that an easiness in assembly operation can be achieved. It is noted that, in the embodiment of the tilt adjustable steering column assembly, eccentric bush 26 is used with rotational center axis 24 of bell crank lever 22 swingably and rotatably supported on the vehicular rearward bracket 8.

## Claims

1. A tilt adjustable steering column assembly for an automotive vehicle, comprising:
- an elongated jacket tubular member (4) having a tilt rotation axle (10) at one end thereof;
- a fixed bracket (8) having an engagement portion that is engaged with a tilt input axle (16) mounted on the jacket tubular member (4)
- a bell crank lever (22) having a rotation center axle (24) rotatably supported on the fixed bracket (8) and rotatably supports the tilt input axle (16) of the jacket tubular member (4) on one arm (22a) thereof; and
- an actuator (28) having a rod portion (28b) to operatively actuate another arm (22b) of the bell crank lever (22) to be moved to pivot the bell crank lever (22), the fixed bracket (8) supporting the rotation center axle (24) of the bell crank lever (22) to enable the rotation center axle (24) of the bell crank lever (22) to swing with respect to the fixed bracket (8)
**characterized in that**
- the fixed bracket (8) is placed at a predetermined middle position of the jacket tubular member (4) and
- the engagement portion of the fixed bracket (8) is formed in an elongated hole (20), the elongated hole (20) being formed to coincide with a pivotal orbit (Q) of the tilt input axle (16) about the tilt rotation center (10) of the jacket tubular member (4),
wherein the tilt adjustable steering column assembly (2) further comprises an eccentric bush (26) interposed between the rotation center axle (24) of the bell crank lever (22) and fixed bracket (8), the rotation center axle (24) of the bell crank lever (22) being enabled to swing with respect to the fixed bracket (18) via the eccentric bush (26).

2. A tilt adjustable steering column assembly for an automotive vehicle as claimed in claim 1, wherein a predetermined eccentric distance (α) is provided between a rotation center axis of the eccentric bush (26) and a center of the rotation center axle (24) of the bell crank lever (22).

3. A tilt adjustable steering column assembly for an automotive vehicle as claimed in claim 2, wherein a curvature of a center line in an elongated direction of the elongated hole (20) is made coincident with a curvature of the pivotal orbit (Q) of the tilt input axle (16).

4. A tilt adjustable steering column assembly for an automotive vehicle as claimed in claim 2, wherein the predetermined eccentric distance (α) is a distance provided for a compensation for an error distance (U)between a rotation orbit of the tilt input axle (16), with an axial distance between the center of the rotation center axle of the bell crank lever (22) and the tilt input axle (16) as a radius of curvature, and the center line of the elongated hole (20).

5. A tilt adjustable steering column assembly for an automotive vehicle as claimed in claim 4, wherein a guide member (21) is attached around the elongated hole (20).

6. A tilt adjustable steering column assembly for an automotive vehicle as claimed in claim 3, wherein the jacket tubular member (4) has the other end thereof opposite to the one end thereof to attach a steering wheel (1) of the vehicle.

7. A tilt adjustable steering column assembly for an automotive vehicle as claimed in claim 1, wherein the elongated hole (20) is of a substantially ellipse shape.

8. A tilt adjustable steering column assembly for an automotive vehicle as claimed in claim 1, wherein the fixed bracket (8) is fixed onto a vehicle body, the tilt rotation center axle (10) of the jacket tubular member (4) is rotatably supported on a vehicular body forward bracket (6) fixed onto the vehicle body via a first auxiliary bracket (14), and a second auxiliary bracket (18) is interposed between the one arm (22a) of the bell crank lever(22) and the jacket tubular member (4).

9. A tilt adjustable steering column assembly for an automotive vehicle as claimed in claim 8, wherein a first turning pair point (D) is provided between the rotation center (S) of the eccentric bush (26) and the fixed bracket (8) and, a second turning pair point (C) is provided between the eccentric bush (26) and rotation center axle (24) of the bell crank lever (22), a third turning pair point (A) is provided between the tilt input axle (16) and the one end of the bell crank lever (22), a fourth turning pair point (B) is provided between the tilt rotation center axle (10) and the vehicular body forward bracket (6), a fifth turning pair point (E) is provided between the other arm (22b) of the bell crank lever (22) and the rod portion (28b) of the actuator (28), and a sixth turning pair point (F) is provided between a main body portion (28a) of the actuator (28) and the jacket tubular member (4) and wherein, when a distance between the fifth turning pair point (E) and the sixth turning pair point (F) is varied by means of the actuator (28), the second turning pair point (C) is pivoted about the first turning pair point (D) and, simultaneously, the third turning pair point (A) is pivoted about the fourth turning pair point (B) with the second turning pair point (C) as a fulcrum so as to tilt the steering wheel (1) in a vertical direction thereof.

## Patentansprüche

1. Eine neigungsverstellbare Lenksäulen - Baugruppe für ein automobiles Fahrzeug, umfassend:
- ein längliches und rohrförmiges Hülsenelement (4) mit einer Neigungsrotationsachse (10) an einem Ende davon;
- eine fixierte Halterung (8) mit einem Eingriffsabschnitt, der sich mit einer Neigungseingabeachse (16) in Eingriff befindet, die an dem rohrförmigen Hülsenelement (4) montiert ist;
- einen Winkelhebel (22) mit einer Rotationsmittelachse (24), der in einer drehbaren Art und Weise an der fixierten Halterung (8) gelagert ist und die Neigungseingabeachse (16) des rohrförmigen Hülsenelements (4) an einem Arm (22a) davon in einer drehbaren Art und Weise lagert; und
- eine Stellvorrichtung (28) mit einem Stababschnitt (28b), um einen anderen Arm (22b) des Winkelhebels (22), der zu bewegen ist, um den Winkelhebel (22) zu schwenken, in einer wirkenden Art und Weise zu betätigen,
wobei die fixierte Halterung (8) die Rotationsmittelachse (24) des Winkelhebels (22) lagert, um zu ermöglichen, dass die Rotationsmittelachse (24) des Winkelhebels (22) im Hinblick auf die fixierte Halterung (8) schwingen kann;
**dadurch gekennzeichnet, dass**
- die fixierte Halterung (8) in einer vorgegebenen Mittelposition des rohrförmigen Hülsenelements (4) angeordnet ist,
- der Eingriffsabschnitt der fixierten Halterung (8) in der Form einer länglichen Öffnung (20) ausgebildet ist, wobei die längliche Öffnung (20) derart ausgebildet ist, um mit einer Schwenkbahn (Q) der Neigungseingabeachse (16) um den Neigungsrotationsmittelpunkt (10) des rohrförmigen Hülsenelements (4) zusammenzufallen,
- wobei die neigungsverstellbare Lenksäulen - Baugruppe (2) ferner eine exzentrische Hülse (26) umfasst, die zwischen der Rotationsmittelachse (24) des Winkelhebels (22) und der fixierten Halterung (8) zwischengeschaltet ist, wobei die Rotationsmittelachse (24) des Winkelhebels (22) dazu in der Lage ist, im Hinblick auf die fixierte Halterung (18) über die exzentrische Hülse (26) zu schwingen.

2. Eine neigungsverstellbare Lenksäulen - Baugruppe für ein automobiles Fahrzeug nach Anspruch 1, wobei vorgegebene exzentrische Distanz (α) zwischen einer Rotationsmittelachse der exzentrischen Hülse (26) und einem Mittelpunkt der Rotationsmittelachse (24) des Winkelhebels (22) vorhanden ist.

3. Eine neigungsverstellbare Lenksäulen - Baugruppe für ein automobiles Fahrzeug nach Anspruch 2, wobei eine Krümmung einer Mittellinie in einer länglichen Richtung der länglichen Öffnung (20) derart ausgeführt ist, um mit einer Krümmung der Schwenkbahn (Q) der Neigungseingabeachse (16) zusammenzufallen.

4. Eine neigungsverstellbare Lenksäulen - Baugruppe für ein automobiles Fahrzeug nach Anspruch 2, wobei die vorgegebene exzentrische Distanz (α) eine Distanz ist, die für eine Kompensation für eine Fehlerdistanz (U) zwischen einer Rotationsbahn der Neigungseingabeachse (16) vorgesehen ist, mit einer axialen Distanz zwischen dem Mittelpunkt der Rotationsmittelachse des Winkelhebels (22) und der Neigungseingabeachse (16) als ein Krümmungsradius, und der Mittellinie der länglichen Öffnung (20).

5. Eine neigungsverstellbare Lenksäulen - Baugruppe für ein automobiles Fahrzeug nach Anspruch 4, wobei ein Führungselement (21) um die längliche Öffnung (20) angebracht ist.

6. Eine neigungsverstellbare Lenksäulen - Baugruppe für ein automobiles Fahrzeug nach Anspruch 3, wobei das rohrförmige Hülsenelement (4) das andere Ende davon, gegenüberliegend zu dem einen davon, aufweist, um ein Lenkrad (1) des Fahrzeugs anzubringen.

7. Eine neigungsverstellbare Lenksäulen - Baugruppe für ein automobiles Fahrzeug nach Anspruch 1, wobei die längliche Öffnung (20) eine im Wesentlichen elliptische Form aufweist.

8. Eine neigungsverstellbare Lenksäulen - Baugruppe für ein automobiles Fahrzeug nach Anspruch 1, wobei die fixierte Halterung (8) an einem Fahrzeugkörper fixiert ist, wobei die Neigungsrotationsmittelachse (10) des rohrförmigen Hülsenelements (4) in einer drehbaren Art und Weise an einer vorderen Halterung (6) des Fahrzeugkörpers gelagert ist, die über eine erste Behelfshalterung (14) an dem Fahrzeugkörper fixiert ist, wobei eine zweite Behelfshalterung (18) zwischen dem einen Arm (22a) des Winkelhebels (22) und dem rohrförmigen Hülsenelement (4) zwischengeschaltet ist.

9. Eine neigungsverstellbare Lenksäulen - Baugruppe für ein automobiles Fahrzeug nach Anspruch 8, wobei ein erster Drehpaarpunkt (D) zwischen dem Rotationsmittelpunkt (S) der exzentrischen Hülse (26) und der fixierten Halterung (8) angeordnet ist, wobei ein zweiter Drehpaarpunkt (C) zwischen der exzentrischen Hülse (26) und der Rotationsmittelachse (24) des Winkelhebels (22) angeordnet ist, wobei ein dritter Drehpaarpunkt (A) zwischen der Neigungseingabeachse (16) und dem einen Ende des Winkelhebels (22) angeordnet ist, wobei ein vierter Drehpaarpunkt (B) zwischen der Neigungsrotationsmittelachse (10) und der vorderen Halterung (6) des Fahrzeugkörpers angeordnet ist, wobei ein fünfter Drehpaarpunkt (E) zwischen dem anderen Arm (22b) des Winkelhebels (22) und dem Stababschnitt (28b) der Stellvorrichtung (28) angeordnet ist, und wobei ein sechster Drehpaarpunkt (F) zwischen einem Hauptkörperabschnitt (28a) der Stellvorrichtung (28) und dem rohrförmigen Hülsenelement (4) angeordnet ist, und wobei, wenn ein Abstand zwischen dem fünften Drehpaarpunkt (E) und dem sechsten Drehpaarpunkt (F) durch die Stellvorrichtung (28) variiert wird, der zweite Drehpaarpunkt (C) um den ersten Drehpaarpunkt (D) geschwenkt wird, wobei in einer simultanen Art und Weise der dritte Drehpaarpunkt (A) um den vierten Drehpaarpunkt (B) mit dem zweiten Drehpaarpunkt (C) als Drehpunkt derart geschwenkt wird, dass das Lenkrad (1) in eine vertikalen Richtung davon geneigt wird.

## Revendications

1. Ensemble de colonne de direction à inclinaison réglable pour un véhicule automobile, comprenant:
- un élément de jupe tubulaire allongé (4) ayant un axe de rotation inclinable (10) à l'une de ses extrémités:
- un support fixe (8) ayant une partie de mise en prise qui est en prise avec un axe d'entrée inclinable (16) monté sur l'élément de jupe tubulaire (4);
- un levier coudé (22) ayant un axe médian de rotation (24) supporté en rotation sur le support fixe (8) et supportant en rotation l'axe d'entrée inclinable (16) de l'élément de jupe tubulaire (4) sur un bras (22a) de celui-ci; et
- un actionneur (28) ayant une partie de bielle (28b) pour actionner de manière fonctionnelle un autre bras (22b) du levier coudé (22) pour être déplacé pour faire pivoter le levier coudé (22), le support fixe (8) supportant l'axe médian de rotation (24) du levier coudé (22) pour permettre à l'axe médian de rotation (24) du levier coudé (22) d'osciller par rapport au support fixe (8),
**caractérisé en ce que**
- le support fixe (8) est placé dans une position centrale prédéterminée de l'élément de jupe tubulaire (4) et
- la partie de mise en prise du support fixe (8) est formée dans un trou allongé (20), le trou allongé (20) étant formé pour coïncider avec une orbite pivotale (Q) de l'axe d'entrée inclinable (16) autour du centre de rotation inclinable (10) de l'élément de jupe tubulaire (4),
dans lequel l'ensemble de colonne de direction à inclinaison réglable (2) comprend, en outre, une bague d'excentrique (26) intercalée entre l'axe médian de rotation (24) du levier coudé (22) et le support fixe (22), l'axe médian de rotation (24) du levier coudé (22) pouvant osciller par rapport au support fixé (8) grâce à la bague d'excentrique (26).

2. Ensemble de colonne de direction à inclinaison réglable pour un véhicule automobile selon la revendication 1, dans lequel une distance d'excentrique prédéterminée (α) est prévue entre un axe médian de rotation de la bague d'excentrique (26) et un centre de l'axe médian de rotation (24) du levier coudé (22).

3. Ensemble de colonne de direction à inclinaison réglable pour un véhicule automobile selon la revendication 2, dans lequel une courbure d'une ligne médiane dans une direction allongée du trou allongé (20) coïncide avec une courbure de l'orbite pivotale (Q) de l'axe d'entrée inclinable (16).

4. Ensemble de colonne de direction à inclinaison réglable pour un véhicule automobile selon la revendication 2, dans lequel la distance d'excentrique prédéterminée (α) est une distance prévue pour une compensation pour une distance d'erreur (U) entre une orbite de rotation de l'axe d'entrée inclinable (16), avec une distance axiale entre le centre de l'axe médian de rotation du levier coudé (22) et l'axe d'entrée inclinable (16) comme rayon de courbure, et la ligne médiane du trou allongé (20).

5. Ensemble de colonne de direction à inclinaison réglable pour un véhicule automobile selon la revendication 4, dans lequel un élément de guidage (21) est fixé autour du trou allongé (20).

6. Ensemble de colonne de direction à inclinaison réglable pour un véhicule automobile selon la revendication 3, dans lequel l'élément de jupe tubulaire (4) a l'autre de ses extrémités opposée à l'une de ses extrémités pour fixer un volant de direction (1) du véhicule.

7. Ensemble de colonne de direction à inclinaison réglable pour un véhicule automobile selon la revendication 1, dans lequel le trou allongé (20) a une forme sensiblement elliptique.

8. Ensemble de colonne de direction à inclinaison réglable pour un véhicule automobile selon la revendication 1, dans lequel le support fixe (8) est fixé sur une carrosserie de véhicule, l'axe de rotation inclinable (10) de l'élément de jupe tubulaire (4) est supporté en rotation sur un support avant de la carrosserie du véhicule (6) fixé sur la carrosserie du véhicule à l'aide d'un premier support auxiliaire (14) et un second support auxiliaire (18) est intercalé entre le bras (22a) du levier coudé (22) et l'élément de jupe tubulaire (4).

9. Ensemble de colonne de direction à inclinaison réglable pour un véhicule automobile selon la revendication 8, dans lequel un premier point de joint de rotation (D) est prévu entre le centre de rotation (S) de la bague d'excentrique (26) et le support fixe (8) et un deuxième point de joint de rotation (C) est prévu entre la bague d'excentrique (26) et l'axe médian de rotation (24) du levier coudé (22) et un troisième point de joint de rotation (A) est prévu entre l'axe d'entrée inclinable (16) et une extrémité du levier coudé (22), et un deuxième point de joint de rotation (C) est prévu entre l'axe de rotation inclinable (10) et le support avant de la carrosserie du véhicule (6) et un cinquième point de joint de rotation (E) est prévu entre l'autre bras (22b) du levier coudé (22) et la partie de bielle (28b) de l'actionneur (28) et un sixième point de joint de rotation (F) est prévu entre une partie principale de corps (28a) de l'actionneur (28) et l'élément de jupe tubulaire (4) et dans lequel le cinquième point de joint de rotation (E) et le sixième point de joint de rotation (F) varient à l'aide de l'actionneur (28), le deuxième point de joint de rotation (C) pivote autour du premier point de joint de rotation (D) et simultanément, le troisième point de joint de rotation (A) pivote autour du quatrième point de joint de rotation (B) avec le deuxième point de joint de rotation (C) comme point d'appui afin d'incliner le volant de direction (1) dans une direction vertical de celui-ci.
